# EUROPÄISCHE PATENTANMELDUNG

(11) **EP 4 717 062 A1**
(43) Veröffentlichungstag der Anmeldung: **01.04.2026**
(21) Anmeldenummer: 25193683.7
(22) Anmeldetag: 04.08.2025
(51) Int. Cl.: A01B 71/02, A01B 71/06, A01B 67/00

(54) **TRAKTOR**

(30) Priorität: 25.09.2024 DE 102024127712
(71) Anmelder: CLAAS Tractor S.A.S., 78141 Vélizy-Villacoublay Cedex (FR)
(72) Erfinder: SCHÜTTE, Robin, 33142 Büren-Weine (DE); FRANKE, Christoph, Delbrück (DE)
(74) Vertreter: CLAAS Gruppe

(57) **Zusammenfassung**

Die vorliegende Erfindung betrifft einen Traktor (1) mit einem Antriebsaggregat (8) und einem Fahrgetriebe (10). Der Traktor (1) umfasst zumindest eine Geräteschnittstelle (15) zur Kopplung des Traktors (1) mit zumindest einem Bodenbearbeitungsgerät (14) und eine Steuereinrichtung (19) zur Ansteuerung des Antriebsaggregats (8) und des Fahrgetriebes (10). Die Steuereinrichtung (19) ist dazu vorgesehen und eingerichtet, bei einem mittels einer Kombination aus Traktor (1) und Bodenbearbeitungsgerät (14) durchzuführenden Bodenbearbeitungsschritt (B₁) das Antriebsaggregat (8) derart anzusteuern, dass, bevor das Bodenbearbeitungsgerät (14) in Bodeneingriff gelangt, eine Drehzahl (n) auf eine für den durchzuführenden Bodenbearbeitungsschritt (B₁) vorgesehene Soll-Betriebsdrehzahl (n_{Soll}) angehoben wird. Der Traktor (1) ist dadurch gekennzeichnet, dass die Steuereinrichtung (19) dazu vorgesehen und eingerichtet ist, in einem dem durchzuführenden Bodenbearbeitungsschritt (B₁) vorangehenden Bodenbearbeitungsschritt (B₀) eine während des Bodeneingriffs des Bodenbearbeitungsgerätes (14) bereitzustellende und/oder bereitgestellte Betriebsdrehzahl (n_{Ist}) zu ermitteln und die ermittelte Betriebsdrehzahl (n_{Ist}) dem Antriebsaggregat (8) als Zielgröße für die Soll-Betriebsdrehzahl (n_{Soll}) vorzugeben.

## Beschreibung

Die vorliegende Erfindung betrifft einen Traktor gemäß dem Oberbegriff des unabhängigen Patentanspruchs 1, eine Kombination aus Traktor und Bodenbearbeitungsgerät gemäß dem Oberbegriff des unabhängigen Patentanspruchs 13 sowie ein Verfahren zum Betreiben eines Traktors gemäß dem Oberbegriff des unabhängigen Patentanspruchs 14.

Es besteht ein grundsätzlicher Bedarf die Drehzahl eines Antriebsaggregats eines Traktors im Betrieb möglichst gering zu halten, um eine hohe Effizienz des Traktors im Betrieb zu gewährleisten, beispielsweise durch einen geringen Kraftstoffbedarf. Führt ein Traktor mit einem angekoppelten Bodenbearbeitungsgerät einen Bodenbearbeitungsvorgang aus und befindet sich die Kombination in einer Vorgewendefahrt, in welcher das Bodenbearbeitungsgerät keinen Bodeneingriff hat, wird das Antriebsaggregat in der Regel nicht mit der für die Bodenbearbeitung erforderlichen Drehzahl betrieben, sondern mit einer verringerten Drehzahl, die meist leicht oberhalb einer Leerlaufdrehzahl des Antriebsaggregats liegt. Verlässt die Kombination aus Traktor und Bodenbearbeitungsgerät die Vorgewendefahrt, um einen nächsten Bodenbearbeitungsschritt durchzuführen, wird das Bodenbearbeitungsgerät über die Geräteschnittstelle des Traktors aus einer angehobenen Stellung in eine abgesenkte Stellung, in welcher sich das Bodenbearbeitungsgerät zur Bearbeitung des Feldbodens in Bodeneingriff befindet, verlagert. Während des Absenkvorgangs wird das Antriebsaggregat in der Regel zunächst mit der verringerten Drehzahl aus der Vorgewendefahrt weiterbetrieben und erst, wenn das Bodenbearbeitungsgerät in Bodeneingriff ist, wird die Drehzahl vom Antriebsaggregat auf eine Betriebsdrehzahl angehoben.

Nachteilig ist hierbei, dass das Antriebsaggregat bei einem Auftreten von Last, also dann, wenn das Bodenbearbeitungsgerät in Bodeneingriff gerät, abgewürgt werden kann, da die Drehzahl schlagartig abfällt und eine Anhebung vom Antriebsaggregat nicht schnell genug erfolgen kann. Sofern das Antriebsaggregat hierbei nicht abgewürgt wird, ist die Reaktion des Antriebsaggregats dennoch für den Bediener des Traktors unangenehm.

Die EP 1 486 657 A1 schlägt in diesem Zusammenhang vor als Reaktion auf eine Betätigung eines Bedienelements zur Steuerung eines mit einem Traktor gekoppelten Bodenbearbeitungsgeräts ein Drehzahlerhöhungssignal zu erzeugen, welches das Antriebsaggregat veranlasst die Drehzahl vorübergehend auf einen vorgegebenen Wert zu erhöhen, und zwar bevor das Bodenbearbeitungsgerät Last auf das Antriebsaggregat aufbringt.

Auch wenn eine solche vorübergehende Erhöhung der Drehzahl ein Abwürgen des Antriebsaggregats bei einem Auftreten von Last verhindert, muss das Antriebsaggregat dennoch im Anschluss eine für die Durchführung des Bodenbearbeitungsschrittes erforderliche Drehzahl einstellen, beispielsweise indem die Drehzahl weiter erhöht oder wieder abgesenkt wird. Diese Schwankungen im Drehzahlband werden von dem Bediener als unangenehm wahrgenommen und senken somit den Fahrkomfort.

Ausgehend hiervon ist es demnach die Aufgabe der vorliegenden Erfindung die beschriebenen Nachteile des Standes der Technik auszuräumen und insbesondere einen Traktor anzugeben, welcher eine effizientere, schonendere und für einen Bediener des Traktors angenehmere Durchführung eines Bodenbearbeitungsvorgangs mit einem Bodenbearbeitungsgerät ermöglicht.

Diese Aufgabe wird erfindungsgemäß durch die hier offenbarten Ausführungsformen gelöst, die insbesondere durch den Gegenstand der unabhängigen Patentansprüche 1, 13 und 14 definiert sind. Die abhängigen Ansprüche 2 bis 12 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung einen Traktor mit einem Antriebsaggregat zur Bereitstellung von Antriebsleistung und einem mit dem Antriebsaggregat zusammenwirkenden Fahrgetriebe zum Antrieb des Traktors. Der Traktor umfasst weiterhin zumindest eine Geräteschnittstelle zur Kopplung des Traktors mit zumindest einem Bodenbearbeitungsgerät sowie eine Steuereinrichtung zur Ansteuerung des Antriebsaggregats und des Fahrgetriebes. Die Steuereinrichtung ist dazu vorgesehen und eingerichtet ist, bei einem mittels einer Kombination aus Traktor und Bodenbearbeitungsgerät durchzuführenden Bodenbearbeitungsschritt eines Bodenbearbeitungsvorgangs einer landwirtschaftlichen Fläche das Antriebsaggregat derart anzusteuern, dass, bevor das Bodenbearbeitungsgerät in Bodeneingriff gelangt, eine von dem Antriebsaggregat bereitgestellte Drehzahl auf eine für den durchzuführenden Bodenbearbeitungsschritt vorgesehene Soll-Betriebsdrehzahl angehoben wird. Der Traktor ist dadurch gekennzeichnet, dass die Steuereinrichtung weiterhin dazu vorgesehen und eingerichtet ist, in einem dem durchzuführenden Bodenbearbeitungsschritt vorangehenden Bodenbearbeitungsschritt eine von dem Antriebsaggregat während des Bodeneingriffs des Bodenbearbeitungsgerätes bereitzustellende und/oder bereitgestellte Betriebsdrehzahl zu ermitteln und die ermittelte Betriebsdrehzahl dem Antriebsaggregat als Zielgröße für die Soll-Betriebsdrehzahl vorzugeben.

Mit anderen Worten, die Steuereinrichtung lernt die in einem dem durchzuführenden Bodenbearbeitungsschritt vorangehenden Bodenbearbeitungsschritt während des Bodeneingriffs durch das Antriebsaggregat aufzubringende und/oder aufgebrachte Drehzahl als Betriebsdrehzahl. Diese von der Steuereinrichtung gelernte Drehzahl wird dann als Regelgröße für den darauffolgenden durchzuführenden Bodenbearbeitungsschritt genutzt, um vor dem Bodeneingriff eine für die Bearbeitung bereits angepasste und zum Schutz vor einem Drehzahlabfall erhöhte Drehzahl einzustellen. Die Steuereinrichtung antizipiert den Lastfall für den durchzuführenden Bodenbearbeitungsschritt demnach basierend auf den Erkenntnissen des vorangegangenen Bodenbearbeitungsschrittes und passt die Drehzahl vor dem Auftreten von Last entsprechend an. Dieser Vorgang kann bei jedem durchzuführenden Bodenbearbeitungsschritt eines gesamten Bodenbearbeitungsvorgangs stattfinden, sodass eine fortwährende an die vorherrschenden Gegebenheiten des Feldbodens adaptierte Anpassung der Drehzahl vorgenommen werden kann. Die Möglichkeit eine bereitzustellende, also von der Steuereinrichtung an das Antriebsaggregat kommandierte, somit vom Antriebsaggregat aufzubringende, und/oder eine bereitgestellte, also eine tatsächlich vom Antriebsaggregat aufgebrachte, Betriebsdrehzahl zu ermitteln erlaubt eine sogenannte Motordrückung zu berücksichtigen, bei welcher die tatsächlich vom Motor bereitgestellte Betriebsdrehzahl leicht unterhalb der bereitzustellenden, also kommandierten, Betriebsdrehzahl liegt.

Durch die erfindungsgemäße Ausgestaltung wird zunächst sichergestellt, dass durch Anheben der vom Antriebsaggregat bereitgestellten Drehzahl diese unter Last, also zu dem Zeitpunkt, wenn das Bodenbearbeitungsgerät in Bodeneingriff gelangt, nicht oder zumindest weniger stark abfällt. Der Fahrkomfort für den Bediener wird hierdurch erheblich gesteigert, gleichzeitig werden die Aggregate des Traktors vor unerwarteten und schlagartigen Überlastzuständen geschützt. Weiterhin wird durch die Ermittlung der Betriebsdrehzahl in dem vorangehenden Bodenbearbeitungsschritt und die Übergabe derselben als Zielgröße für die Soll-Betriebsdrehzahl im durchzuführenden Bodenbearbeitungsschritt eine effizientere Durchführung des Bodenbearbeitungsschrittes und somit des gesamten Bodenbearbeitungsvorgangs erzielt. Der Bediener muss die vorgesehene Soll-Betriebsdrehzahl nicht selbst einstellen, wodurch Fehleinstellungen vermieden werden können. Weiterhin muss das Antriebsaggregat unter Last nicht auf die vorgesehene Betriebsdrehzahl nachgeregelt werden, da die voreingestellte erhöhte Drehzahl oberhalb oder unterhalb der vorgesehenen Betriebsdrehzahl für den durchzuführenden Bodenbearbeitungsschritt liegt. Auch dies steigert den Fahrkomfort weiter.

Gemäß einer vorteilhaften Weiterbildung der Erfindung ist vorgesehen, dass das Antriebsaggregat einen Drehzahlsensor umfasst, welcher dazu vorgesehen und eingerichtet ist, die von dem Antriebsaggregat bereitgestellte Drehzahl zu erfassen und der Steuereinrichtung zur Ermittlung der Betriebsdrehzahl zu übermitteln.

Gemäß einer vorteilhaften Weiterbildung der Erfindung ist vorgesehen, dass das Fahrgetriebe einen Drehmomentsensor umfasst, welcher dazu vorgesehen und eingerichtet ist, ein an einer Abtriebswelle des Fahrgetriebes wirkendes Drehmoment zu erfassen, wobei die Steuereinrichtung dazu vorgesehen und eingerichtet ist, mittels des Drehmomentsensors ein in dem vorangehenden Bodenbearbeitungsschritt an der Abtriebswelle des Fahrgetriebes während des Bodeneingriffs des Bodenbearbeitungsgerätes wirkendes Betriebsdrehmoment zu ermitteln.

Die Verwendung eines Drehmomentsensors am Fahrgetriebe erlaubt das wirkende Drehmoment an der Abtriebswelle zu erfassen und ein Betriebsdrehmoment zu ermitteln. Dieses ermittelte Betriebsdrehmoment kann genutzt werden, um den Lastfall im vorangehenden Bodenbearbeitungsschritt zu überwachen und wichtige Erkenntnisse für die Antizipation des Lastfalls im durchzuführenden Bodenbearbeitungsschritt zu ziehen.

Gemäß einer vorteilhaften Weiterbildung der Erfindung ist vorgesehen, dass die Steuereinrichtung dazu vorgesehen und eingerichtet ist, ein von einem Bediener des Traktors oder ein automatisiert ausgelöstes Signal zum Absenken des Bodenbearbeitungsgerätes zu empfangen.

Das Auslösen des Absenkvorgangs des Bodenbearbeitungsgerätes signalisiert der Steuereinrichtung, dass eine Vorgewendefahrt zwischen zwei aufeinanderfolgenden Bodenbearbeitungsschritten abgeschlossen ist, der durchzuführende Bodenbearbeitungsschritt somit unmittelbar bevorsteht und demnach ein Auftreten von Last durch einen Bodeneingriff des Bodenbearbeitungsgeräts zu erwarten ist.

Gemäß einer vorteilhaften Weiterbildung der Erfindung ist vorgesehen, dass die Steuereinrichtung dazu vorgesehen und eingerichtet ist, den Zeitpunkt, in welchem das Bodenbearbeitungsgerät in Bodeneingriff gelangt, anhand eines ausgehend von einem Empfang eines Signals zum Absenken des Bodenbearbeitungsgerätes laufenden Timers zu definieren und die Ansteuerung des Antriebsaggregats zur Anhebung der bereitgestellten Drehzahl auf die für den durchzuführenden Bodenbearbeitungsschritt vorgesehene Soll-Betriebsdrehzahl innerhalb des laufenden Timers vorzunehmen.

Gemäß einer vorteilhaften Weiterbildung der Erfindung ist vorgesehen, dass die Steuereinrichtung dazu vorgesehen und eingerichtet ist, während des vorangehenden Bodenbearbeitungsschrittes einen Zeitraum zu erfassen, den das an der Abtriebswelle des Fahrgetriebes wirkende Drehmoment ausgehend von dem Empfang des Signals zum Absenken des Bodenbearbeitungsgerätes benötigt, um einen unterhalb des Betriebsdrehmomentes liegenden Schwellwert zu erreichen, und den erfassten Zeitraum dem Timer zugrunde zu legen.

Die Definition eines Timers stellt eine besonders rechenleistungsschonende Möglichkeit dar das Auftreten von Last bedingt durch einen Bodeneingriff des Bodenbearbeitungsgerätes sicher abzuschätzen und die Erhöhung der vom Antriebsaggregat bereitgestellten Drehzahl auf die Soll-Betriebszahl zuverlässig durch die Steuereinrichtung zu kommandieren. Es muss somit für die Ansteuerung des Antriebsaggregats zur Anhebung der Drehzahl auf die vorgesehene Soll-Betriebsdrehzahl in dem kurzen Zeitfenster zwischen dem Auslösen des Signals zum Absenken des Bodenbearbeitungsgerätes und dem Auftreten von Last keine Überwachung des wirkenden Drehmomentes vorgenommen werden. Zwar erfolgt die Überwachung des wirkenden Drehmomentes immer parallel, diese Überwachung beeinflusst jedoch nicht den durchzuführenden Bodenbearbeitungsschritt, sondern dient lediglich der Definition des Zeitraums für den Timer für einen nachfolgenden Bodenbearbeitungsschritt.

Gemäß einer vorteilhaften Weiterbildung der Erfindung ist vorgesehen, dass die zumindest eine Geräteschnittstelle eine als Hubwerk ausgebildete mechanische Schnittstelle umfasst, wobei die Steuereinrichtung dazu vorgesehen und eingerichtet ist, basierend auf dem Signal zum Absenken des Bodenbearbeitungsgeräts das Hubwerk anzusteuern.

Gemäß einer vorteilhaften Weiterbildung der Erfindung ist vorgesehen, dass die zumindest eine Geräteschnittstelle eine hydraulische Schnittstelle umfasst, wobei die Steuereinrichtung dazu vorgesehen und eingerichtet ist, basierend auf dem Signal zum Absenken des Bodenbearbeitungsgeräts die Hydraulikschnittstelle anzusteuern.

Je nach Ausgestaltung des Bodenbearbeitungsgerätes als aufgesatteltes Bodenbearbeitungsgerät mit eigenem Fahrwerk oder als nicht-aufgesatteltes Bodenbearbeitungsgerät ohne Fahrwerk ist es möglich, das Bodengerät aus einer angehobenen Stellung in der Vorgewendefahrt abzusenken und somit für die Durchführung des Bodenbearbeitungsschrittes in Bodeneingriff zu bringen.

Gemäß einer vorteilhaften Weiterbildung der Erfindung ist vorgesehen, dass die Steuereinrichtung dazu vorgesehen und eingerichtet ist, eine für den durchzuführenden Bodenbearbeitungsschritt vorgesehene Fahrtrichtung zu berücksichtigen und als Zielgröße für die Soll-Betriebsdrehzahl eine in einem unmittelbar vorangehenden Bodenbearbeitungsschritt mit gleicher Fahrtrichtung ermittelte Betriebsdrehzahl vorzugeben.

Die Möglichkeit eine Fahrtrichtung des Traktors zu berücksichtigen, erlaubt eine richtungsabhängige Ansteuerung des Antriebsaggregats. Eine solche Ausgestaltung ist insbesondere dann von Vorteil, wenn die zu bearbeitende landwirtschaftliche Fläche eine Hanglage aufweist oder örtlich Senken in der landwirtschaftlichen Fläche vorhanden sind. Die Steuereinrichtung nutzt für die Kommandierung der Soll-Betriebsdrehzahl dann immer nur den vorangehenden Bodenbearbeitungsschritt der in gleicher Fahrtrichtung durchgeführt wird/wurde, da der Lastfall in gleicher Fahrtrichtung bei geneigten Flächen in der Regel ähnlich, in entgegengesetzten Fahrtrichtungen hingegen grundlegend verschieden ist.

Gemäß einer vorteilhaften Weiterbildung der Erfindung ist vorgesehen, dass die Steuereinrichtung dazu vorgesehen und eingerichtet ist, die Erhöhung der Drehzahl des Antriebsaggregats auf die für den durchzuführenden Bodenbearbeitungsschritt vorgesehene Soll-Betriebsdrehzahl nur dann vorzunehmen, wenn eine oder mehrere der folgenden Betriebsbedingungen vorliegen:
- eine vorherrschende Fahrgeschwindigkeit des Traktors und/oder eine angeforderte Fahrgeschwindigkeit des Traktors liegt oberhalb eines festlegbaren bzw. festgelegten Schwellwertes;
- eine Differenz zwischen der angeforderten Fahrgeschwindigkeit des Traktors und einer vorherrschenden Fahrgeschwindigkeit des Traktors liegt unterhalb eines festlegbaren bzw. festgelegten Schwellwertes;
- eine Drehzahl des Antriebsaggregats liegt unterhalb der vorgesehenen Soll-Betriebsdrehzahl; und/oder
- eine Zapfwelle des Traktors ist inaktiv.

Gemäß einer vorteilhaften Weiterbildung der Erfindung ist vorgesehen, dass der Traktor ein Fahrerassistenzsystem umfasst, welches dazu vorgesehen und eingerichtet ist, eine Funktionsaktivierung der Ansteuerung des Antriebsaggregats zur Erhöhung der Drehzahl auf die vorgesehene Soll-Betriebsdrehzahl durch die Steuereinrichtung vorzunehmen.

Gemäß einer vorteilhaften Weiterbildung der Erfindung ist vorgesehen, dass das Fahrgetriebe als hydromechanisches Getriebe mit einem leistungsverzweigten mechanischen Getriebe und einem stufenlos verstellbaren hydrostatischen Getriebe, das mit dem mechanischen Getriebe zusammenwirkt, ausgebildet ist, wobei das hydrostatische Getriebe eine als Pumpe wirkende hydrostatische Einheit und eine als Motor wirkende hydrostatische Einheit umfasst, die miteinander über Leitungen zur Übertragung von Leistung hydraulisch verbunden sind.

Die erfindungsgemäße Aufgabe wird ferner durch eine Kombination aus einem solchen Traktor und einem Bodenbearbeitungsgerät gemäß dem unabhängigen Patentanspruch 13 gelöst.

Weiterhin wird erfindungsgemäße Aufgabe durch ein Verfahren zum Betreiben eines Traktors gemäß dem unabhängigen Patentanspruch 14 gelöst.

Demnach betrifft die vorliegende Erfindung weiterhin ein Verfahren zum Betreiben eines Traktors. Der Traktor umfasst ein Antriebsaggregat zur Bereitstellung von Antriebsleistung, ein mit dem Antriebsaggregat zusammenwirkendes Fahrgetriebe zum Antrieb des Traktors, zumindest eine Geräteschnittstelle zur Kopplung des Traktors mit zumindest einem Bodenbearbeitungsgerät sowie eine Steuereinrichtung zur Ansteuerung des Antriebsaggregats und des Fahrgetriebes. Die Steuereinrichtung steuert bei einem mittels einer Kombination aus Traktor und Bodenbearbeitungsgerät durchzuführenden Bodenbearbeitungsschritt eines Bodenbearbeitungsvorgangs einer landwirtschaftlichen Fläche das Antriebsaggregat derart an, dass, bevor das Bodenbearbeitungsgerät in Bodeneingriff gelangt, eine von dem Antriebsaggregat bereitgestellte Drehzahl auf eine für den durchzuführenden Bodenbearbeitungsschritt vorgesehene Soll-Betriebsdrehzahl angehoben wird. Das Verfahren ist dadurch gekennzeichnet, dass die Steuereinrichtung in einem dem durchzuführenden Bodenbearbeitungsschritt vorangehenden Bodenbearbeitungsschritt eine von dem Antriebsaggregat während des Bodeneingriffs des Bodenbearbeitungsgerätes bereitzustellende und/oder bereitgestellte Betriebsdrehzahl ermittelt und die ermittelte Betriebsdrehzahl dem Antriebsaggregat als Zielgröße für die Soll-Betriebsdrehzahl vorgibt.

Die Merkmale der abhängigen Patentansprüche 2 bis 12 sind gleichermaßen auf das erfindungsgemäße Verfahren übertragbar.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen Traktors mit einem daran gekoppelten Bodenbearbeitungsgerät in Gestalt eines Pfluges;
- FIG. 2: eine schematische und exemplarische Darstellung einer erfindungsgemäßen Kombination aus Traktor und Bodenbearbeitungsgerät während der Durchführung eines Bodenbearbeitungsvorgangs; und
- FIG. 3: ein schematischer Graph, welcher exemplarisch einen Ablauf eines erfindungsgemäßen Verfahrens zum Betreiben des erfindungsgemäßen Traktors aus FIG. 1 darstellt.

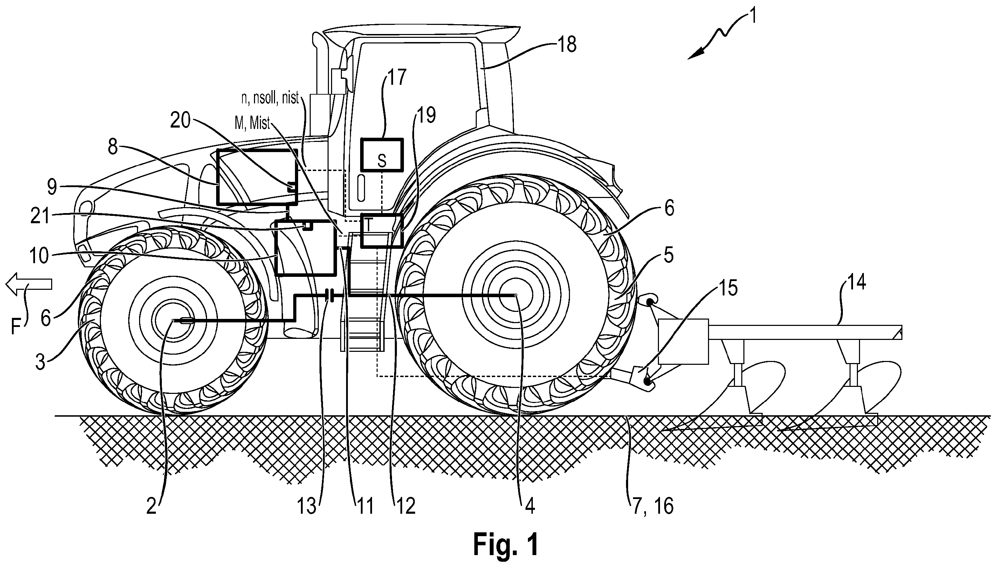

FIG. 1 zeigt einen erfindungsgemäßen Traktor 1 in einer schematischen und exemplarischen Darstellung, wobei der grundsätzliche Aufbau eines Traktors 1 als dem Fachmann bekannt angesehen wird.

Der Traktor 1 umfasst eine Vorderachse 2 und eine Hinterachse 3. Zumindest die Vorderachse 2 ist als lenkbare Achse ausgeführt. Der Traktor 1 umfasst mehrere an der Vorderachse 2 angeordnete Vorderräder 3 und mehrere an der Hinterachse 4 angeordnete Hinterräder 5. Die Vorderräder 3 und die Hinterräder 5 weisen dabei jeweils luftgefüllte Reifen 6 auf, welche mit dem Boden 7, insbesondere zur Übertragung von Antriebskräften, in Eingriff stehen. Des Weiteren umfasst der Traktor 1 ein Antriebsaggregat 8, welches vorzugsweise als ein Verbrennungsmotor ausgeführt ist, und zur Bereitstellung von Antriebsleistung dient. Das Antriebsaggregat 8 ist durch eine Antriebswelle 9 mit einem Fahrgetriebe 10 verbunden, sodass das Antriebsaggregat 8 und das Fahrgetriebe 10 zum Antrieb der Achsen 2, 4 und somit des Traktors 1 zusammenwirken. Über die Antriebswelle 9 wird die von dem Antriebsaggregat 8 bereitgestellte Antriebsleistung an das Fahrgetriebe 10 übertragen. Das Fahrgetriebe 10 ist durch eine Abtriebswelle 11 mit einem Antriebsstrang 12 verbunden, welcher der Übertragung eines von dem Fahrgetriebe 10 übersetzten Drehmomentes und der Drehzahl wahlweise auf die Vorderachse 2 und/oder die Hinterachse 4 und somit die daran angeordneten Räder 3, 5 dient. Bevorzugt wird zumindest die Hinterachse 4 angetrieben. Der die Vorderachse 2 und die Hinterachse 4 verbindende Antriebsstrang 12 ist durch eine schaltbare Kupplung 13 unterbrechbar, so dass wahlweise nur die Hinterachse 4 oder im Allradbetrieb die Vorderachse 2 und die Hinterachse 4 durch das Antriebsaggregat 8 antreibbar sind. Das Fahrgetriebe 10 ist als hydromechanisches Getriebe ausgebildet, wobei der grundsätzliche Aufbau als dem Fachmann bekannt angesehen wird. Kurzum umfasst das hydromechanische Getriebe ein leistungsverzweigtes mechanisches Getriebe sowie ein damit wirkverbundenes stufenlos verstellbares hydrostatisches Getriebe. Ein solches hydromechanisches Getriebe ermöglicht eine stufenlos einstellbare Übersetzung zwischen einer Getriebeeingangswelle, welche mit der Antriebswelle 9 des Antriebsaggregats 8 gekoppelt ist, und der Abtriebswelle 11, welche das hydromechanische Getriebe mit dem Antriebsstrang 12 und somit mit den Achsen 2, 3 koppelt. Das hydrostatische Getriebe überträgt die Antriebsleistung dabei, indem eine als Pumpe wirkende hydrostatische Einheit mit einer als Motor wirkenden hydrostatischen Einheit über Leitungen hydraulisch verbunden ist.

Zur Kopplung des Traktors 1 mit einem landwirtschaftlichen Bodenbearbeitungsgerät 14, beispielsweise einem in FIG. 1 dargestellten Pflug oder einem Grubber, und zur Übertragung von Zugkräften vom Traktor 1 auf das Bodenbearbeitungsgerät 14 im Betrieb zur Durchführung eines Bodenbearbeitungsvorgangs einer landwirtschaftlichen Fläche 16 umfasst der Traktor 1 eine oder mehrere Geräteschnittstellen 15, die front- und/oder heckseitig am Traktor 1 vorgesehen sein können. Die Geräteschnittstelle 15 umfasst eine mechanische Schnittstelle, die als Hubwerk oder als Zugpendel ausgebildet sein kann und der Aufhängung des Bodenbearbeitungsgeräts 14 bzw. der Übertragung der Zugkraft auf das Bodenbearbeitungsgerät 14 dient, und eine hydraulische Schnittstelle, über die das Bodenbearbeitungsgerät 14 bedarfsweise hydraulisch mit dem Traktor 1 zur Steuerung von Funktionen gekoppelt werden kann. Ein Bodenbearbeitungsvorgang B umfasst üblicherweise eine Mehrzahl aufeinander folgende Bodenbearbeitungsschritte, wobei die Bodenbearbeitungsschritte üblicherweise nacheinander in entgegengesetzte Fahrtrichtungen F durchgeführt werden. Während der Durchführung eines Bodenbearbeitungsschrittes befindet sich das Bodenbearbeitungsgerät 14 überwiegend, bis auf die Fahrt im Vorgewende zwischen zwei aufeinander folgenden Bodenbearbeitungsschritten, in Eingriff mit dem zu bearbeitenden Boden 7. Begibt sich die Kombination aus Traktor 1 und Bodenbearbeitungsgerät 14 in die Vorgewendefahrt zwecks Wechsel der Fahrtrichtung und Durchführung eines nachfolgenden Bodenbearbeitungsschrittes wird das Bodenbearbeitungsgerät 14 angehoben und aus dem Bodeneingriff gelöst. Ist die Fahrt im Vorgewende abgeschlossen, sodass ein nachfolgender Bodenbearbeitungsschritt ansteht, wird das Bodenbearbeitungsgerät 14 abgesenkt, um zwecks Bearbeitung wieder mit dem Boden 7 in Eingriff zu gelangen. Das Anheben und Absenken des Bodenbearbeitungsgerätes 14 kann je nach Ausgestaltung des Bodenbearbeitungsgerätes 14 entweder über eine Ansteuerung der als Hubwerk ausgeführten mechanischen Schnittstelle erfolgen oder aber, sofern das Bodenbearbeitungsgerät 14 aufgesattelt ausgeführt ist, das heißt ein eigenes Fahrwerk umfasst, durch Ansteuerung der hydraulischen Schnittstelle angehoben und abgesenkt werden. Ein Signal zum Anheben oder Absenken des Bodenbearbeitungsgeräts 14 kann dabei entweder von einem Bediener des Traktors 1 über ein Fahrerassistenzsystem 17 oder ein Bedienelement in einer Kabine 18 des Traktors 1 ausgelöst werden oder aber, falls ein automatisierter Betrieb aktiv ist, automatisiert von dem Fahrerassistenzsystem 17 des Traktors 1 ausgelöst werden. Das Signal zum Anheben oder Absenken des Bodenbearbeitungsgeräts 14 wird an eine Steuereinrichtung 19 des Traktors 1, welche als Bestandteil des Fahrerassistenzsystems 17 oder losgelöst vom Fahrerassistenzsystem 17 ausgeführt sein kann, übermittelt. Die Steuereinrichtung 19 nimmt basierend auf dem empfangenen Signal die Ansteuerung der entsprechenden für die Funktionserfüllung "Bodenbearbeitungsgerät Absenken oder Anheben" vorgesehene Schnittstelle der Geräteschnittstelle 15 vor. Die Steuereinrichtung 19 ist allerdings nicht nur zur Ansteuerung der Geräteschnittstelle 15 vorgesehen, vielmehr dient sie der Ansteuerung der weiteren Aggregate des Traktors 1, insbesondere dem Antriebsaggregat 8 und dem Fahrgetriebe 10.

Wie eingangs geschildert kann es bei der Durchführung eines Bodenbearbeitungsschrittes zu einem unerwünschten Abfall der von dem Antriebsaggregat 8 bereitgestellten Drehzahl kommen, wenn das Bodenbearbeitungsgerät 14 beim Absenken in Eingriff mit dem Boden 7 gelangt. Erfindungsgemäß ist nunmehr vorgesehen, dass das Antriebsaggregat 8 bei einen durchzuführenden Bodenbearbeitungsschritt B₁ durch die Kombination aus Traktor 1 und Bodenbearbeitungsgerät 14 für die Durchführung derart angesteuert wird, dass, bevor das Bodenbearbeitungsgerät 14 in Bodeneingriff gelangt, die von dem Antriebsaggregat 8 bereitgestellte Drehzahl n auf eine für den durchzuführenden Bodenbearbeitungsschritt B₁ vorgesehene Soll-Betriebsdrehzahl n_{Soll} angehoben wird. Mit anderen Worten, die Steuereinrichtung 19 kommandiert dem Antriebsaggregat 8 eine derartige Soll-Betriebsdrehzahl n_{Soll}, dass das Antriebsaggregat 8 bereits vor dem Bodeneingriff durch das Bodenbearbeitungsgerät 14 eine Drehzahl n aufbringt, die höher ist als die in der Vorgewendefahrt ohne Bodeneingriff vom Antriebsaggregat 8 bereitgestellte Drehzahl n₀, die üblicherweise leicht oberhalb einer Leerlaufdrehzahl des Antriebsaggregats 8 liegt. Hierdurch kann ein starker Abfall der von dem Antriebsaggregat 8 bereitgestellten Drehzahl n im Zeitpunkt des Bodeneingriffs durch das Bodenbearbeitungsgerät 14 verhindert werden, was den Fahrkomfort erheblich steigert und die Belastung der Aggregate des Traktors 1 und des Bodenbearbeitungsgerätes 14 reduziert.

Die Steuereinrichtung 19 ist allerdings nicht nur in der Lage das Antriebsaggregat 8 derart anzusteuern, dass irgendeine höhere Soll-Betriebsdrehzahl n_{Soll} vom Antriebsaggregat 8 bereitgestellt wird, sondern die Steuereinrichtung 19 steuert erfindungsgemäß das Antriebsaggregat 8 derart an, dass eine für den durchzuführenden Bodenbearbeitungsschritt B₁, das heißt an die vorherrschenden Bodengegebenheiten, angepasste Drehzahl n als Soll-Betriebsdrehzahl n_{Soll} vom Antriebsaggregat 8 bereitgestellt wird. Hierzu ermittelt die Steuereinrichtung 19 in einem dem durchzuführenden Bodenbearbeitungsschritt B₁ vorangehenden Bodenbearbeitungsschritt B₀, insbesondere einem solchen unmittelbar vorangehenden Bodenbearbeitungsschritt B₀, welcher mit einer gleichen Fahrtrichtung F wie der durchzuführende Bodenbearbeitungsschritt B₁ durchgeführt wird/wurde - die Steuereinrichtung 19 ist hierbei eingerichtet die Fahrtrichtung F des Traktors 1 bzw. der Kombination aus Traktor 1 und Bodenbearbeitungsgerät 14 zu ermitteln -, eine von dem Antriebsaggregat 8 während des Bodeneingriffs des Bodenbearbeitungsgerätes 14 bereitzustellende, also von der Steuereinrichtung 19 an das Antriebsaggregat 8 kommandierte, und/oder bereitgestellte Betriebsdrehzahl n_{Ist}. Diese ermittelte Betriebszahl n_{Ist}, die vorzugsweise einen über den gesamten Bodenbearbeitungsschritt B₀ gemittelten Wert darstellt, um Drehzahlspitzen herauszufiltern, wird in einem - in den FIGs. nicht dargestellten - mit der Steuereinrichtung 19 zur Übertragung von Daten verbundenen Speicher hinterlegt und sodann dem Antriebsaggregat 8 für die Durchführung des durchzuführenden Bodenbearbeitungsschrittes B₁ als Zielgröße für die Soll-Betriebsdrehzahl n_{Soll} vorgegeben. Mit anderen Worten, die Steuereinrichtung 19 lernt die in einem dem durchzuführenden Bodenbearbeitungsschritt B₁ vorangehenden Bodenbearbeitungsschritt B₀ während des Bodeneingriffs durch das Antriebsaggregat 8 aufzubringende und/oder aufgebrachte Drehzahl n als Betriebsdrehzahl n_{Ist}. Diese von der Steuereinrichtung 19 gelernte Drehzahl n, n_{Ist} wird dann als Regelgröße für den darauffolgenden durchzuführenden Bodenbearbeitungsschritt B₁ genutzt, um vor dem Bodeneingriff eine für die Bearbeitung angepasste und zum Schutz vor einem Drehzahlabfall erhöhte Drehzahl n als Soll-Betriebsdrehzahl n_{Soll} einzustellen.

Zur Ermittlung der vom Antriebsaggregat 8 bereitgestellten Drehzahlen n umfasst das Antriebsaggregat 8 einen Drehzahlsensor 20. Der Drehzahlsensor 20 ist mit der Steuereinrichtung 19 zur Übertragung von Daten verbunden und übermittelt der Steuereinrichtung 19 die gemessenen Drehzahlwerte. Die Steuereinrichtung 19 ermittelt anhand der von dem Drehzahlsensor 20 bereitgestellten Drehzahlwerte dann unter anderem die in dem vorangehenden Bodenbearbeitungsschritt B₀ während des Bodeneingriffs vom Antriebsaggregat 8 bereitgestellte Betriebsdrehzahl n_{Ist}.

Neben dem am Antriebsaggregat 8 vorgesehenen Drehzahlsensor 20 kann das Fahrgetriebe 10 weiterhin einen Drehmomentsensor 21 umfassen. Der Drehmomentsensor 21 ist dazu vorgesehen und eingerichtet ist, ein an der Abtriebswelle 11 des Fahrgetriebes 10 wirkendes Drehmoment M zu erfassen. Wie auch der Drehzahlsensor 20 ist der Drehmomentsensor 21 mit der Steuereinrichtung 19 zur Übertragung von Daten verbunden und übermittelt der Steuereinrichtung 19 die an der Abtriebswelle 11 gemessenen Drehmomentwerte. Die Steuereinrichtung 19 ermittelt anhand der von dem Drehmomentsensor 21 bereitgestellten Drehmomentwerte dann unter anderem ein in dem vorangehenden Bodenbearbeitungsschritt B₀ an der Abtriebswelle 11 des Fahrgetriebes 10 während des Bodeneingriffs des Bodenbearbeitungsgerätes 14 wirkendes Betriebsdrehmoment M_{Ist}.

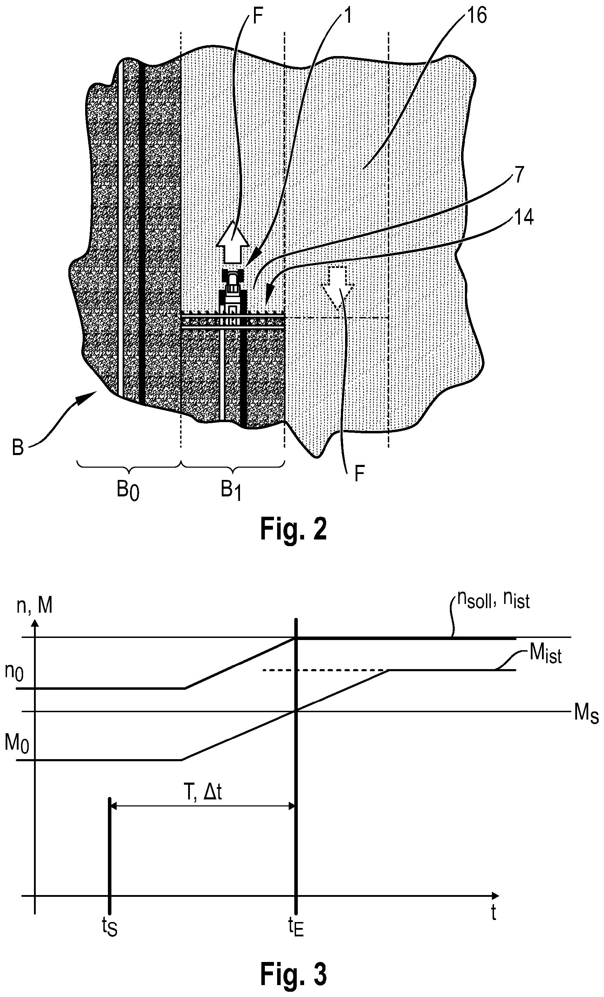

Die vorgesehene erhöhte Soll-Betriebsdrehzahl n_{Soll} soll wie geschildert vor dem Eingriff des Bodenbearbeitungsgeräts 14 mit dem Boden 7 von Antriebsaggregat 8 bereitgestellt werden, für eine Vorgewendefahrt ist die erhöhte Soll-Betriebsdrehzahl n_{Soll} allerdings nicht gewünscht, da dies zu Effizienzeinbußen führen würde. Somit ist es wünschenswert, dass die vom Antriebsaggregat 8 bereitgestellte Drehzahl n nicht per se auf die für den durchzuführenden Bodenbearbeitungsschritt B₁ vorgesehene Soll-Betriebsdrehzahl n_{Soll}, also die Betriebsdrehzahl n_{Ist} des vorangehenden Bodenbearbeitungsschrittes B₀, angehoben wird, sondern dies erst unmittelbar vor dem Bodeneingriff erfolgt. Um dies sicherzustellen, ist die Steuereinrichtung 19 dazu vorgesehen und eingerichtet, den Zeitpunkt t_{E}, in welchem das Bodenbearbeitungsgerät 14 in Bodeneingriff gelangt, anhand eines ausgehend von dem Empfang eines Signals S zum Absenken des Bodenbearbeitungsgerätes 14 laufenden Timers T zu definieren und die Ansteuerung des Antriebsaggregats 8 zur Anhebung der bereitgestellten Drehzahl n auf die für den durchzuführenden Bodenbearbeitungsschritt B₁ vorgesehene Soll-Betriebsdrehzahl n_{Soll} innerhalb des laufenden Timers T vorzunehmen. Der von dem Timer T definierte Zeitraum wird dabei ebenfalls in dem vorangehenden Bodenbearbeitungsschritt B₀ ermittelt und zwar, in dem die Steuereinrichtung 19 während des vorangehenden Bodenbearbeitungsschrittes B₀ einen Zeitraum Δt erfasst, den das an der Abtriebswelle 11 des Fahrgetriebes 10 wirkende Drehmoment M ausgehend von dem Empfang des Signals S zum Absenken des Bodenbearbeitungsgerätes 14 zum Zeitpunkt tₛ benötigt, um ausgehend von einem Drehmoment M₀, welches in der Vorgewendefahrt wirkt, einen unterhalb des Betriebsdrehmomentes M_{Ist} liegenden Schwellwert Mₛ zu erreichen. Dieser gemessene Zeitraum Δt, welcher beispielsweise 5 Sekunden betragen kann, wird von der Steuereinrichtung 19 im Speicher hinterlegt und dem Timer T für den durchzuführenden Bodenbearbeitungsschritt B₁ zugrunde gelegt. Mit anderen Worten, anhand des Timers T wird von der Steuereinrichtung 19 der Bodeneingriff durch das Bodenbearbeitungsgerät 14 nach Auslösen des Absenkvorgangs des Bodenbearbeitungsgeräts 14 antizipiert. Die Steuereinrichtung 19 muss sicherstellen, dass sie dem Antriebsaggregat 8 innerhalb des dem Timer T zugrundeliegenden Zeitraums Δt die Betriebsdrehzahl n_{Ist} aus dem vorangehenden Bodenbearbeitungsschritt B₀ als Soll-Betriebsdrehzahl n_{Soll} für den durchzuführenden Bodenbearbeitungsschritt kommandiert. Vorzugsweise erhöht das Antriebsaggregat 8 nach Kommandierung durch die Steuereinrichtung 19 die Drehzahl n rampenförmig bis auf die vorgesehene, kommandierte Soll-Betriebsdrehzahl n_{Soll}, welcher der Betriebsdrehzahl n_{Ist} des vorangehenden Bearbeitungsschrittes B₀ entspricht. FIG. 3 bildet dieses Verfahren schematisch und exemplarisch in Gestalt eines Graphen ab.

Die zuvor beschriebene erfindungsgemäße Funktion der vor Bodeneingriff vorgenommenen Drehzahlanpassung durch Lastantizipation muss nicht per se im Betrieb des Traktors 1 bzw. der Kombination aus Traktor 1 und Bodenbearbeitungsgerät 14 aktiv sein. Vielmehr kann eine Funktionsaktivierung über das Fahrerassistenzsystem 17, beispielsweise durch einen bedienerseitig ausgelösten Aktivierungsbefehl oder automatisiert, erfolgen. Die Steuereinrichtung 19 überprüft bei Aktivierung zunächst, ob gewisse Betriebsbedingungen vorliegen, welche eine Aktivierung der Funktion überhaupt erlauben. Solche Betriebsbedingungen sind, dass eine vorherrschende Fahrgeschwindigkeit des Traktors 1 und/oder eine angeforderte Fahrgeschwindigkeit des Traktors 1 oberhalb eines festlegbaren bzw. festgelegten Schwellwertes liegen, eine Differenz zwischen der angeforderten Fahrgeschwindigkeit des Traktors 1 und einer vorherrschenden Fahrgeschwindigkeit des Traktors 1 unterhalb eines festlegbaren bzw. festgelegten Schwellwertes liegen, eine Drehzahl des Antriebsaggregats 8 unterhalb der vorgesehenen Soll-Betriebsdrehzahl n_{Soll} liegt und/oder eine Zapfwelle des Traktors 1 inaktiv ist.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Traktor | n | Drehzahl |
| 2 | Vorderachse | n₀ | Drehzahl im Vorgewende |
| 3 | Vorderrad | n_{Soll} | Soll-Betriebsdrehzahl |
| 4 | Hinterachse | n_{Ist} | Betriebsdrehzahl |
| 5 | Hinterrad | M | Drehmoment |
| 6 | Reifen | M₀ | Drehmoment im Vorgewende |
| 7 | Boden | Mₛ | Schwellwert Drehmoment |
| 8 | Antriebsaggregat | M_{Ist} | Betriebsdrehmoment |
| 9 | Antriebswelle | S | Signal zum Absenken des Bodenbearbeitungsgerätes |
| 10 | Fahrgetriebe | | |
| 11 | Abtriebswelle | T | Timer |
| 12 | Antriebsstrang | Δt | Zeitraum |
| 13 | Kupplung | t_{E} | Zeitpunkt Bodeneingriff |
| 14 | Bodenbearbeitungsgerät | t_{S} | Zeitpunkt Signal zum Absenken |
| 15 | Geräteschnittstelle | | |
| 16 | Landwirtschaftliche Fläche | | |
| 17 | Fahrerassistenzsystem | | |
| 18 | Kabine | | |
| 19 | Steuereinrichtung | | |
| 20 | Drehzahlsensor | | |
| 21 | Drehmomentsensor | | |
| B | Bodenbearbeitungsvorgang | | |
| B₀ | Vorangehender Bearbeitungsschritt | | |
| B₁ | Durchzuführender Bearbeitungsschritt | | |
| F | Fahrtrichtung | | |

## Patentansprüche

1. Traktor (1) mit einem Antriebsaggregat (8) zur Bereitstellung von Antriebsleistung und einem mit dem Antriebsaggregat (8) zusammenwirkenden Fahrgetriebe (10) zum Antrieb des Traktors (1), wobei der Traktor (1) zumindest eine Geräteschnittstelle (15) zur Kopplung des Traktors (1) mit zumindest einem Bodenbearbeitungsgerät (14) umfasst, wobei der Traktor (1) eine Steuereinrichtung (19) zur Ansteuerung des Antriebsaggregats (8) und des Fahrgetriebes (10) umfasst, wobei die Steuereinrichtung (19) dazu vorgesehen und eingerichtet ist, bei einem mittels einer Kombination aus Traktor (1) und Bodenbearbeitungsgerät (14) durchzuführenden Bodenbearbeitungsschritt (B₁) eines Bodenbearbeitungsvorgangs (B) einer landwirtschaftlichen Fläche (16) das Antriebsaggregat (8) derart anzusteuern, dass, bevor das Bodenbearbeitungsgerät (14) in Bodeneingriff gelangt, eine von dem Antriebsaggregat (8) bereitgestellte Drehzahl (n) auf eine für den durchzuführenden Bodenbearbeitungsschritt (B₁) vorgesehene Soll-Betriebsdrehzahl (n_{Soll}) angehoben wird, **dadurch gekennzeichnet, dass** die Steuereinrichtung (19) dazu vorgesehen und eingerichtet ist, in einem dem durchzuführenden Bodenbearbeitungsschritt (B₁) vorangehenden Bodenbearbeitungsschritt (B₀) eine von dem Antriebsaggregat (8) während des Bodeneingriffs des Bodenbearbeitungsgerätes (14) bereitzustellende und/oder bereitgestellte Betriebsdrehzahl (n_{Ist}) zu ermitteln und die ermittelte Betriebsdrehzahl (n_{Ist}) dem Antriebsaggregat (8) als Zielgröße für die Soll-Betriebsdrehzahl (n_{Soll}) vorzugeben.

2. Traktor (1) nach Anspruch 1, **dadurch gekennzeichnet, dass** das Antriebsaggregat (8) einen Drehzahlsensor (20) umfasst, welcher dazu vorgesehen und eingerichtet ist, die von dem Antriebsaggregat (8) bereitgestellte Drehzahl (n) zu erfassen und der Steuereinrichtung (19) zur Ermittlung der Betriebsdrehzahl (n_{Ist}) zu übermitteln.

3. Traktor (1) nach Anspruch 1 oder 2, **dadurch gekennzeichnet, dass** das Fahrgetriebe (10) einen Drehmomentsensor (21) umfasst, welcher dazu vorgesehen und eingerichtet ist, ein an einer Abtriebswelle (11) des Fahrgetriebes (10) wirkendes Drehmoment (M) zu erfassen, wobei die Steuereinrichtung (19) dazu vorgesehen und eingerichtet ist, mittels des Drehmomentsensors (21) ein in dem vorangehenden Bodenbearbeitungsschritt (B₀) an der Abtriebswelle (11) des Fahrgetriebes (10) während des Bodeneingriffs des Bodenbearbeitungsgerätes (14) wirkendes Betriebsdrehmoment (M_{Ist}) zu ermitteln.

4. Traktor (1) nach einem der Ansprüche 1 bis 3, **dadurch gekennzeichnet, dass** die Steuereinrichtung (19) dazu vorgesehen und eingerichtet ist, ein von einem Bediener des Traktors (1) oder ein automatisiert ausgelöstes Signal (S) zum Absenken des Bodenbearbeitungsgerätes (14) zu empfangen.

5. Traktor (1) nach Anspruch 4, **dadurch gekennzeichnet, dass** die Steuereinrichtung (19) dazu vorgesehen und eingerichtet ist, den Zeitpunkt (t_{E}), in welchem das Bodenbearbeitungsgerät (14) in Bodeneingriff gelangt, anhand eines ausgehend von einem Empfang des Signals (S) zum Absenken des Bodenbearbeitungsgerätes (14) laufenden Timers (T) zu definieren und die Ansteuerung des Antriebsaggregats (8) zur Anhebung der bereitgestellten Drehzahl (n) auf die für den durchzuführenden Bodenbearbeitungsschritt (B₁) vorgesehene Soll-Betriebsdrehzahl (n_{Soll}) innerhalb des laufenden Timers (T) vorzunehmen.

6. Traktor (1) nach Anspruch 5 in Kombination mit Anspruch 3, **dadurch gekennzeichnet, dass** die Steuereinrichtung (19) dazu vorgesehen und eingerichtet ist, während des vorangehenden Bodenbearbeitungsschrittes (B₀) einen Zeitraum (Δt) zu erfassen, den das an der Abtriebswelle (11) des Fahrgetriebes (10) wirkende Drehmoment (M) ausgehend von dem Empfang des Signals (S) zum Absenken des Bodenbearbeitungsgerätes (14) benötigt, um einen unterhalb des Betriebsdrehmomentes (M_{Ist}) liegenden Schwellwert (Mₛ) zu erreichen, und den erfassten Zeitraum (Δt) dem Timer (T) zugrunde zu legen.

7. Traktor (1) nach einem der Ansprüche 4 bis 6, **dadurch gekennzeichnet, dass** die zumindest eine Geräteschnittstelle (15) eine als Hubwerk ausgebildete mechanische Schnittstelle umfasst, wobei die Steuereinrichtung (19) dazu vorgesehen und eingerichtet ist, basierend auf dem Signal (S) zum Absenken des Bodenbearbeitungsgeräts (14) das Hubwerk anzusteuern.

8. Traktor (1) nach einem der Ansprüche 4 bis 7, **dadurch gekennzeichnet, dass** die zumindest eine Geräteschnittstelle (15) eine hydraulische Schnittstelle umfasst, wobei die Steuereinrichtung (19) dazu vorgesehen und eingerichtet ist, basierend auf dem Signal (S) zum Absenken des Bodenbearbeitungsgeräts (14) die hydraulische Schnittstelle anzusteuern.

9. Traktor (1) nach einem der Ansprüche 1 bis 8, **dadurch gekennzeichnet, dass** die Steuereinrichtung (19) dazu vorgesehen und eingerichtet ist, eine für den durchzuführenden Bodenbearbeitungsschritt (B₁) vorgesehene Fahrtrichtung (F) zu berücksichtigen und als Zielgröße für die Soll-Betriebsdrehzahl (n_{Soll}) eine in einem unmittelbar vorangehenden Bodenbearbeitungsschritt (B₀) mit gleicher Fahrtrichtung (F) ermittelte Betriebsdrehzahl (n_{Ist}) vorzugeben.

10. Traktor (1) nach einem der Ansprüche 1 bis 9, **dadurch gekennzeichnet, dass** die Steuereinrichtung (19) dazu vorgesehen und eingerichtet ist, die Erhöhung der Drehzahl (n) des Antriebsaggregats (8) auf die für den durchzuführenden Bodenbearbeitungsschritt (B₁) vorgesehene Soll-Betriebsdrehzahl (n_{Soll}) nur dann vorzunehmen, wenn eine oder mehrere der folgenden Betriebsbedingungen vorliegen:
- eine vorherrschende Fahrgeschwindigkeit des Traktors (1) und/oder eine angeforderte Fahrgeschwindigkeit des Traktors (1) liegt oberhalb eines festlegbaren bzw. festgelegten Schwellwertes;
- eine Differenz zwischen der angeforderten Fahrgeschwindigkeit des Traktors (1) und einer vorherrschenden Fahrgeschwindigkeit des Traktors (1) liegt unterhalb eines festlegbaren bzw. festgelegten Schwellwertes;
- eine Drehzahl (n) des Antriebsaggregats (8) liegt unterhalb der vorgesehenen Soll-Betriebsdrehzahl (nₛₒₗₗ); und/oder
- eine Zapfwelle des Traktors (1) ist inaktiv.

11. Traktor (1) nach einem der Ansprüche 1 bis 10, **dadurch gekennzeichnet, dass** der Traktor (1) ein Fahrerassistenzsystem (17) umfasst, welches dazu vorgesehen und eingerichtet ist, eine Funktionsaktivierung der Ansteuerung des Antriebsaggregats (8) zur Erhöhung der Drehzahl (n) auf die vorgesehene Soll-Betriebsdrehzahl (n_{Soll}) durch die Steuereinrichtung (19) vorzunehmen.

12. Traktor (1) nach einem der Ansprüche 1 bis 11, **dadurch gekennzeichnet, dass** das Fahrgetriebe (10) als hydromechanisches Getriebe mit einem leistungsverzweigten mechanischen Getriebe und einem stufenlos verstellbaren hydrostatischen Getriebe, das mit dem mechanischen Getriebe zusammenwirkt, ausgebildet ist, wobei das hydrostatische Getriebe eine als Pumpe wirkende hydrostatische Einheit und eine als Motor wirkende hydrostatische Einheit umfasst, die miteinander über Leitungen zur Übertragung von Leistung hydraulisch verbunden sind.

13. Kombination aus einem Traktor (1) und einem Bodenbearbeitungsgerät (14), **dadurch gekennzeichnet, dass** der Traktor (1) nach einem der Ansprüche 1 bis 12 ausgebildet ist.

14. Verfahren zum Betreiben eines Traktors (1), wobei der Traktor (1) ein Antriebsaggregat (8) zur Bereitstellung von Antriebsleistung und einem mit dem Antriebsaggregat (8) zusammenwirkenden Fahrgetriebe (10) zum Antrieb des Traktors (1), zumindest eine Geräteschnittstelle (15) zur Kopplung des Traktors (1) mit zumindest einem Bodenbearbeitungsgerät (14) und eine Steuereinrichtung (19) zur Ansteuerung des Antriebsaggregats (8) und des Fahrgetriebes (10) umfasst, wobei die Steuereinrichtung (19) bei einem mittels einer Kombination aus Traktor (1) und Bodenbearbeitungsgerät (14) durchzuführenden Bodenbearbeitungsschritt (B₁) eines Bodenbearbeitungsvorgangs (B) einer landwirtschaftlichen Fläche (16) das Antriebsaggregat (8) derart ansteuert, dass, bevor das Bodenbearbeitungsgerät (14) in Bodeneingriff gelangt, eine von dem Antriebsaggregat (8) bereitgestellte Drehzahl (n) auf eine für den durchzuführenden Bodenbearbeitungsschritt (B₁) vorgesehene Soll-Betriebsdrehzahl (n_{Soll}) angehoben wird, **dadurch gekennzeichnet, dass** die Steuereinrichtung (19) in einem dem durchzuführenden Bodenbearbeitungsschritt (B₁) vorangehenden Bodenbearbeitungsschritt (B₀) eine von dem Antriebsaggregat (8) während des Bodeneingriffs des Bodenbearbeitungsgerätes (14) bereitzustellende und/oder bereitgestellte Betriebsdrehzahl (n_{Ist}) ermittelt und die ermittelte Betriebsdrehzahl (n_{Ist}) dem Antriebsaggregat (8) als Zielgröße für die Soll-Betriebsdrehzahl (n_{Soll}) vorgibt.
